Europäisches Patentamt

European Patent Office

Office européen des brevets

(11) Publication number: **0 166 493**
**B1**

(12) **EUROPEAN PATENT SPECIFICATION**

(45) Date of publication of patent specification: **16.05.90**

(21) Application number: **85201015.6**

(22) Date of filing: **26.06.85**

(51) Int. Cl.⁵: **A 01 B 49/02, A 01 B 33/06**

(54) Soil cultivating implements.

(30) Priority: **27.06.84 NL 8402020**

(43) Date of publication of application:
**02.01.86 Bulletin 86/01**

(45) Publication of the grant of the patent:
**16.05.90 Bulletin 90/20**

(84) Designated Contracting States:
**AT CH DE FR GB IT LI NL**

(56) References cited:
**EP-A-0 071 516**
**AU-B- 548 295**
**DE-A-1 967 103**
**GB-A-1 229 392**
**GB-A-2 007 483**
**NL-A-7 506 857**
**US-A-4 171 725**

(73) Proprietor: **C. van der Lely N.V.**
**Weverskade 10 P.O. Box 26**
**NL-3155 ZG Maasland (NL)**

(72) Inventor: **Van der Lely, Ary**
**10a Weverskade**
**Maasland (NL)**
Inventor: **Bom, Cornelis Johannes Gerardus**
**16 Laan van Nieuw Rozenburg**
**Rozenburg (NL)**

(74) Representative: **Mulder, Herman et al**
**Octrooibureau Van der Lely N.V. Weverskade 10**
**P.O. Box 26**
**NL-3155 ZG Maasland (NL)**

Courier Press, Leamington Spa, England.

## Description

The invention relates to soil cultivating implements or machines which comprise an elongate frame portion that extends transverse to the intended direction of operative travel of the implement, the frame portion supporting a plurality of power-drivable soil working members and the implement also comprising a ground roller which is arranged behind the soil working members relative to said direction of travel and which is upwardly and downwardly adjustable in bodily position with respect to the soil working members by the displacement of supporting arms about a pivotal axis, and each of said pivotable supporting arms is provided with an upwardly extending guide arranged to cooperate adjustable and retainingly with a support which is fixed in position relative to said frame portion, the chosen position of said guide with respect to said supports determining the bodily level of the ground roller with respect to that of the soil working members, the soil working members are arranged in a row alongside one another in cooperating relationship, each soil working member being rotatable about a corresponding substantially vertical axis and each soil working member includes a substantially horizontal carrier at opposite end regions of which downwardly projecting soil working tools are mounted.

Soil cultivating implements of this kind as known from the UK Patent Application 2.007.483 which are intended, inter alia, to produce seed beds most of the time are used in combination with a sowing machine, so that the soil worked immediately afterwards can be seeded.

A combination of a soil cultivating implement provided with power driven soil working members and a sowing machine is disclosed in the British Patent 1.229.392. With this known construction the sowing machine is coupled to the rear of the soil cultivating implement by means of arms that can co-operate with fixed upwardly extending guide means for upwardly and downwardly adjustment.

With the above-mentioned combinations the stability of same during operation is not always such that an uninterrupted action of the sowing machine is guaranteed.

The invention has for its object to provide simple means for amending the stability of the implement in such a way that when combined with a sowing machine the proper action of the sowing machine is ensured. In accordance with the invention there is provided a soil working implement of the kind set forth, whereby a beam is arranged at substantially the same level as said carriers and in advance thereof with respect to said direction of operative travel, the beam being provided with track-disruption means arranged to break up the wheel tracks of the tractor or other vehicle which moves the implement over the ground during its use, the said track-disruption means comprises members which are inclined downwardly and rearwardly from the said beam with respect to the intended direction of operative travel of the implement.

By means of this construction the track-disruption members additionally serve to stabilise the implement during its progress over the ground, thus ensuring a proper action of a sowing or planting machine that is arranged immediately behind the soil cultivating implement to sow seeds or position plants directly in the soil that has just been worked by the cultivating implement.

For a better understanding of the invention, and to show how the same may be carried into effect, reference will now be made, by way of example, to the accompanying drawings, in which:

Figure 1 is a somewhat diagrammatic plan view of a soil cultivating implement in accordance with the invention disposed behind an agricultural tractor,

Figure 2 is a side elevation as seen in the direction indicated by an arrow II in Figure 1,

Figure 3 is a section, to a considerably enlarged scale, taken on the line III-III in Figure 2,

Figure 4 is a front elevation, to an enlarged scale, of one soil working member of the implement as seen in the direction indicated by an arrow IV in Figure 1, and

Figure 5 is an underneath plan view of the soil working member illustrated in Figure 4 and as seen in the direction indicated by an arrow V in Figure 4.

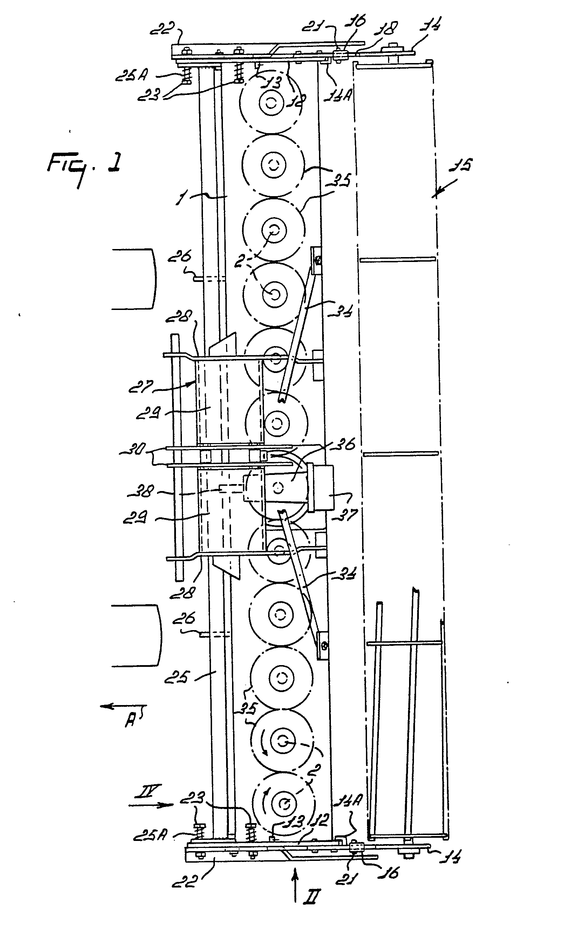

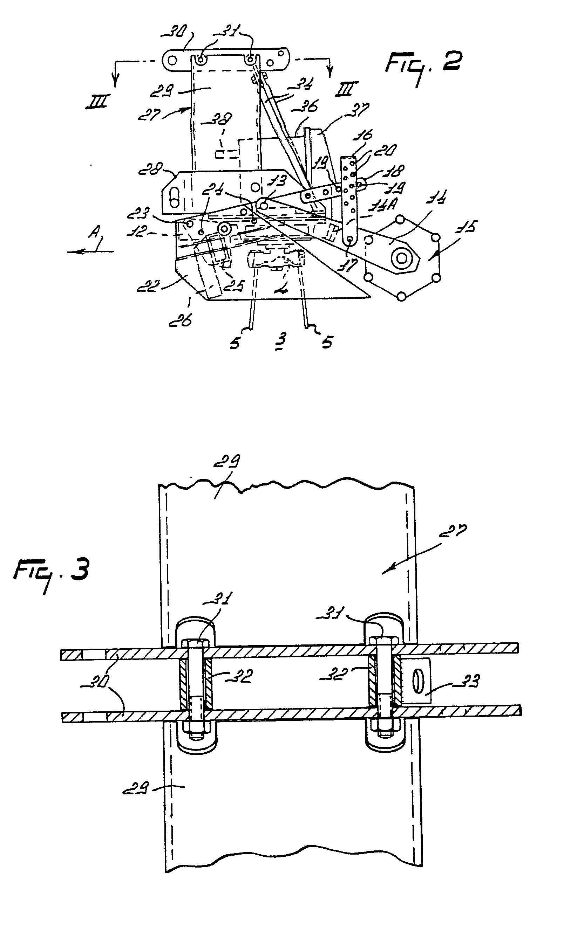

Referring to the accompanying drawings, the soil cultivating implement that is illustrated therein is in the form of a rotary harrow that is intended primarily, but not exclusively, for preparing previously worked agricultural soil for use as a seed bed. The implement comprises a hollow box-section frame portion 1 that extends substantially horizontally transverse and usually, as illustrated, substantially horizontally perpendicular, to the intended direction of operative travel of the implement that is indicated by an arrow A in Figures 1 and 2 of the drawings. A plurality, of which there are twelve in the embodiment that is being described, of substantially vertical, or at least upwardly extending, shafts 2 are rotatably journalled in bearings carried by upper and lower walls of the hollow frame portion 1, the axes of rotation of all twelve of the shafts 2 being parallel to one another and being arranged in a row that is parallel to the transverse length of the frame portion 1 with the longitudinal axis/axis of rotation of each shaft 2 spaced apart from the or each of its immediate neighbours by the same distance which very conveniently, but not essentially, has a magnitude of substantially 25 centimetres.

Each shaft 2 projects downwardly from beneath the bottom of the hollow frame portion 1 and there carries a corresponding soil working member 3. Each soil working member 3 comprises a substantially horizontally disposed support or carrier 4 having two arms that project substantially radially in opposite directions (see Figure 5) from a central internally splined hub 6 thereof which co-operates with matching external splines on the downwardly projecting portion of the shaft 2 concerned, a lowermost extremity of that shaft being screw-threaded to receive a nut and a washer. Known means, such as a transverse split pin (see Figure 4) is provided to prevent the fastening nut from accidentally working loose. Each carrier 4 is formed from cast steel and the opposite radially outer ends of its two arms are formed with substantially U-shaped or channel-shaped recesses 7 (Figure 5) whose walls are parallel or substantially parallel to the longitudinal axis of the corresponding shaft 2, the limbs of the U or channel of each recess 7 being directed outwardly away from the base thereof with respect to the axis of rotation of the rotary soil working member 3 under consideration.

Each soil working member 3 comprises two soil working tools in the form of blade- or knife-shaped tines 5 and each tine 5 has an upper fastening portion 8 that is engaged in a corresponding one of the recesses 7, the interiors of those recesses 7 constituting fastening locations or surfaces for the tines 5. The way in which the tines 5 are releasably secured in the recesses 7 will be described in detail below. The substantially horizontally disposed carrier 4 of each soil working member 3 has a longitudinal axis a (Figure 5) and the relatively parallel base walls of the two recesses 7 at the opposite ends of that carrier 4 are inclined to said axis a at an angle which preferably, but not essentially, has a magnitude of substantially 40°.

Each tine 5 has a corresponding soil working portion 11 (Figures 4 and 5) which projects downwardly in gently divergent relationship (see Figure 2) with the portion 11 of the other tine 5 of the same member 3. Each fastening portion 8 is firmly but releasably secured in a respective recess 7 by a bolt 9 and a clamp 10, it being noted from the drawings that the screw-threaded shank of each bolt 9 is directed rearwardly from the head thereof with respect to the intended direction of operative rotation B of each rotary soil working member 3. Each clamp 10 has a portion which projects outwardly beyond one limb of the corresponding recess 7 and that projecting portion exhibits a side which will be foremost during rotation of the soil working member 3 concerned in the respective direction B and it will be appreciated that this foremost projecting portion protects the shank of the respective bolt 9, together with its co-operating nut, against damage by direct impacts against stones and other hard objects embedded in the soil, progressive abrasive wear of these parts also being slowed down to a large extent due to the protection offered by the clamp 10, and particularly the portion thereof that projects outwardly and that is foremost with respect to the direction of rotation B concerned. A rebate 10A is formed in each arm of each carrier 4 at the front of that arm, considered in the direction of rotation B, and at a location generally between the hub 6 and the back of the corresponding recess 7, each rebate 10A communicating by way of a corresponding bore with the front surface of the base wall of the neighbouring recess 7. Each bore receives the shank of one of the bolts 9 and the head of that bolt 9 therefore lies against one surface of the respective rebate 10A.

The straight soil working portion 11 of each tine 5 extends downwardly from the fastening portion 8 thereof and it will be seen from Figures 4 and 5 of the drawings that the leading edge of that portion 11, with respect to the direction of rotation B, is bevelled to form a cutting edge. This cutting edge trails downwardly and rearwardly, from top to bottom and with respect to the direction of rotation B, at an angle of substantially 8° to the longitudinal axis b (Figure 4) of the tine concerned. This disposition of each bevelled cutting edge has the result that, towards the lowermost end of each tine 5, the bevel intersects the respective axis b. It will be apparent from Figure 4 of the drawings that the rear edge of the soil working portion 11 of each tine 5, with respect to the corresponding direction of rotation B, is in substantially parallel relationship with the longitudinal axis b of that soil working portion 11. Due to the disposition of each fastening recess 7 relative to the longitudinal axis a of each carrier 4, the leading bevelled cutting edges of the soil working portions 11 of the tines 5 are further from the axes of rotation of the respective soil working members 3 than are the rear edges of those portions 11. This enhances the soil crumbling effect of the tines 5 and substantially, if not entirely, prevents the rear edges of the portions 11 thereof producing a soil smearing effect when the implement is operated in heavy soil that is in a wet condition.

The opposite ends of the hollow frame portion 1 are closed by side plates 12 that extend substantially vertically parallel to one another and to the direction A, each side plate 12 being larger in area than is the end of the hollow frame portion 1 which it closes and having an uppermost edge that extends upwardly and rearwardly, with respect to the direction A, from front to rear. Each side plate 12 is provided, close to the inclined upper edge thereof that has just been mentioned and approximately centrally along the length of that edge, with a horizontal pivot pin 13 that projects from both sides of the plate 12 concerned in a direction substantially parallel to the transverse length of the frame portion 1. The leading end of a supporting arm 14 is turnably mounted on each pivot pin 13 in such a way that said arm 14 extends rearwardly from its pivot pin 13 alongside the outer surface of the side plate 12 concerned and is inclined downwardly and rearwardly to an adjustable extent that will be explained. As can be seen in Figure 2 of the drawings, each supporting arm 14 is of progressively increasing width (in a vertical plane) from its front to a location close to its rear and, at that rear, each arm 14 carries a corresponding substantially horizontal bearing and a ground roller 15 is mounted between the two bearings so as to be freely rotatable about a substantially horizontal axis that is parallel to the hollow frame portion 1 and to the row of soil working members 3. The illustrated ground roller 15 is an open-work, cage-formation roller whose soil-engaging surface is defined principally by a plurality, such as six, of elongate tubular or rod-formation elements which are wound helically around the axis of rotation of the roller to a small extent. However, this known formation of the ground roller 15 is by no means essential and a roller of another construction could equally well be used.

Each supporting arm 14 is provided, at a location which is just in advance of the roller 15 with respect to the direction A and approximately one third of the way along each arm 14 from the axis of rotation of the roller 15 to the corresponding pivot pin 13, with a pivot 17 that projects substantially horizontally from each side of the arm 14 concerned in a direction parallel to the transverse length of the frame portion 1. Each pivot 17 has a forked guide 16 that is of narrow width in a direction parallel to the respective pivot pin 17, said guide 16 having the free ends of its two limbs turnably engaged with the pivot 17 at the opposite sides of the corresponding arm 14, the limbs of said guide 16 extending upwardly to be integrally interconnected at their uppermost ends by a narrow "base" of the forked guide.

A strip-shaped support 18 is secured to the upper edge of each frame portion side plate 12 so as effectively rearwardly to prolong the upwardly and rearwardly inclined upper edge of that side plate 12 and it will be seen from the drawings that a rear region of each support 18 is sandwiched between the two strip-shaped limbs of the corresponding movable guide 16. Stops 19 which are conveniently, but not essentially, in the form of bolts are entered through holes in the rear region of each support 18 that has just been mentioned to lie immediately in front of, and immediately behind, the front and rear edges, respectively, of the two limbs of one of the forked guides 16. Two upright rows of registering holes 20 are formed through the two limbs of each guide 16, the two rows of holes being adjacent to the leading edges and to the rear edges, respectively, of the two limbs of each forked guide 16 with the holes 20 in one row staggered vertically lengthwise of the guide 16 relative to those in the other row (see Figure 2).

A retaining pin 21 (Figure 1) can be entered through any pair of aligned holes 20 in either row in the two limbs of each forked guide 16 immediately beneath the lower edge of the corresponding support 18 so that the roller 15 and arms 14 will not be able to turn bodily upwards about the axis defined by the pivot pins 13 beyond a corresponding position. Since the implement bears upon the ground surface principally by way of the roller 15 when it is in operation, what has just been described is the principal factor determining the maximum depth of penetration of the tines 5 of the soil working members 3 into the ground which is possible during a cultivating operation. If desired, to increase operating stability and particularly to minimise jolting on uneven ground, a further pin 21 may be entered through appropriate aligned holes 20 in each forked guide 16 immediately above the upper edge of each support 18 as well as immediately beneath the lower edge thereof. During inoperative transport of the implement, it will usually be lifted clear of contact with the ground by the lifting device or hitch of a tractor or other vehicle and, under these circumstances, the roller 15 will move bodily downwards until the upper edges of the supports 18 come into engagement with the integral connections between the two limbs of each forked guide 16 at the upper ends of those limbs. If jolting during transport is likely to be a problem, retaining pins 21 can also be entered through appropriate holes 20 immediately beneath the lower edges of the supports 18 at such times.

An angle member 14A is secured to the inner surface of each arm 14 alongside the rear curved edge of the adjacent side plate 12 and has one limb embracing that curved edge to prevent laterally acting forces from bending the arms 14 about their pivot pins 13.

Shield plates 22 that extend substantially vertically parallel to one another and to the direction A are connected to the side plates 12 of the hollow frame portion 1 at the opposite ends of that frame portion, each shield plate 22 having a smaller upper portion which is parallel to, but offset inwardly away from, a larger lower portion by way of an intermediate portion that integrally interconnects the smaller and larger portions which have just been mentioned by means of two parallel fold lines. The irregular pentagonal shape of each of the two symmetrically identical shield plates 22 can be seen in Figure 2 of the drawings from which it will be apparent that the leading edge, with respect to the direction A, of each shield plate extends obliquely downwardly and rearwardly from a point that is a short distance between the lower and outer one of the two fold lines that have just been discussed. The much longer rear edge of each shield plate is parallel, as seen in Figure 2, throughout its length to the lower inclined portion of the leading edge to which reference has just been made and the lowermost and rearmost end of this rear edge is contained in a vertical plane which is perpendicular to the direction A and that contains, or is close to (depending upon the bodily position of the roller 15 relative to the remainder of the implement), an imaginary cylindrical figure that contains the skeletal ground-engaging outer surface of the roller 15 when the latter is revolved about its axis of rotation. The lowermost and rearmost end of the downwardly and rearwardly inclined rear edge of each shield plate 22 makes a junction with the horizontally disposed lowermost edge of the same shield plate 22 and, accordingly, the rearmost end of the lower edge of each shield plate 22 is also contained in the vertical plane that coincides with, or is close to, the imaginary cylindrical surface centered upon the axis of rotation of the roller 15 that has been mentioned above. This arrangement enables the ground roller 15, which itself performs a soil cultivating operation, to co-operate with soil delivered rearwardly, with respect to the direction A, along the inner surfaces of the shield plates 22 by the soil working members 3 close to the opposite ends of the roller 15. A substantially uniform distribution of the displaced soil results and a smooth seed bed is formed with little, if any, ridging. The outward offset of the lower and larger portions of the shield plates 22 (see Figure 1) provides the spacing that is necessary between the rear ends of those lower portions and the opposite ends of the ground roller 15.

The larger upper portion of each shield plate 22 is connected to the respective frame portion side plate 12 by two relatively spaced bolts 23 both of which are close to its upwardly and rearwardly inclined uppermost edge. Each bolt 23 is entered with a significant amount of clearance through a hole in the side plate 12 concerned that is of larger diameter than is the shank of the bolt and it will be apparent from Figure 1 of the drawings that each bolt 23 has a shank whose length is considerably greater than that which would be required for a rigid coupling between the plates 12 and 22. The shank of each bolt 23 is surrounded, at the side of the corresponding plate 12 which is remote from the shield plate 22 concerned, by a helical compression spring 25A which bears, with the aid of appropriate washers (not shown) if required, between the head of the bolt 23 and the inner surface of the respectively frame portion side plate 12. Thus, each shield plate 22 can yield outwardly to some extent against the resilient opposition of the corresponding compression springs 25A to enable it to maintain an optimum co-operation with the neighbouring soil working members 3 at the opposite ends of the row of those members 3 to crumble soil to the same thorough extent as is produced by co-operation between immediately neighbouring members 3 closer to the centre of the implement. In particular, should a stone or other hard object become momentarily jammed between one of the somewhat flexible tines 5 of one of those members 3 at the opposite ends of the row thereof and the neighbouring shield plate 22, the resilient support of that shield plate 22 will allow said plate 22 to yield outwardly and release the trapped stone or other hard object without any breakage or other damage occurring.

The upper and larger portion of each shield plate 22 is formed with a second pair of holes 24 which are located beneath, and obliquely rearwardly away from, the holes (not visible) which receive the bolts 23. Should the ground roller 15 of the implement be set at a bodily level which will only allow a shallower maximum depth of penetration of the tines 5 into the ground than that which can be seen in Figure 2 of the drawings, it is appropriate to displace the shield plates 22 upwardly and forwardly by temporarily removing the bolts 23 and replacing them through the holes 24. The shield plates 22 are effectively displaced both upwardly, and forwardly with respect to the direction A, relative to the frame portion 1 and soil working members 3 by taking this action, the forward displacement thereof preventing any interference between the rear regions of the shield plates 22 and the neighbouring arms 14 that rotatably support the roller 15.

A beam 25 of oblong cross-section extends parallel to the row of soil working members 3 at a level which is substantially the same as that of the carriers 4 of those members 3 and at a position a little in advance thereof with respect to the direction A, the beam 25 acting as a screen for the upper parts of the soil working members 3 and being provided, at its opposite ends, with mounting plates that are secured to the inner surfaces of leading portions of the two frame portion side plates 12 which project forwardly in front of the frame portion 1 itself. As can be seen in Figure 2 of the drawings, the hollow beam 25 is so disposed that its broader parallel surfaces are upwardly and forwardly inclined, with respect to the direction A, from bottom to top, the rear one of those two surfaces being close enough to the soil working members 3 to co-operate with each of them in crumbling and distributing the soil that is displaced by rotation of the members 3 combined with their forward progress in the direction A. If the screening beam 25 should encounter a stone or other hard object on, or close to, the surface of the ground being worked by the implement, its inclined front surface will tend to push that stone or other hard object downwardly into the soil to a level where it will not be struck by the carrier 4 of at least one soil working member 3 with the result that damage from such impacts is considerably reduced.

The front of the screening beam 25, with respect to the direction A, is adjustably provided with track-disruption members 26 that are arranged to penetrate into, and effectively grub out, tracks left by the broad rear wheels of a tractor or other operating vehicle. Each track-disruption member 26 takes the form of a downwardly and rearwardly inclined strip (see Figure 2) which is adjustably connected to the screening beam 25 by removable bolts and co-operating holes in such a way that the general plane of each member 26 is substantially vertically parallel to the direction A, the adjustability of the members 26 along the screening beam 25 enabling them to be disposed at substantially equal distances on opposite sides of the centre point of that beam 25 to match the particular track width of the tractor or other vehicle which moves and operates the implement. In addition to breaking up the wheel tracks formed by the tractor or other vehicle, it has been found that the provision of the members 26 improves the stability of the implement when it is in use and particularly the stability of any seed drill that may, as is often the case, be used in combination with the implement both to cultivate the ground and sow seeds therein in a single operation. Increased stability of the seed drill results in an improved uniformity in the sowing of seeds thereby.

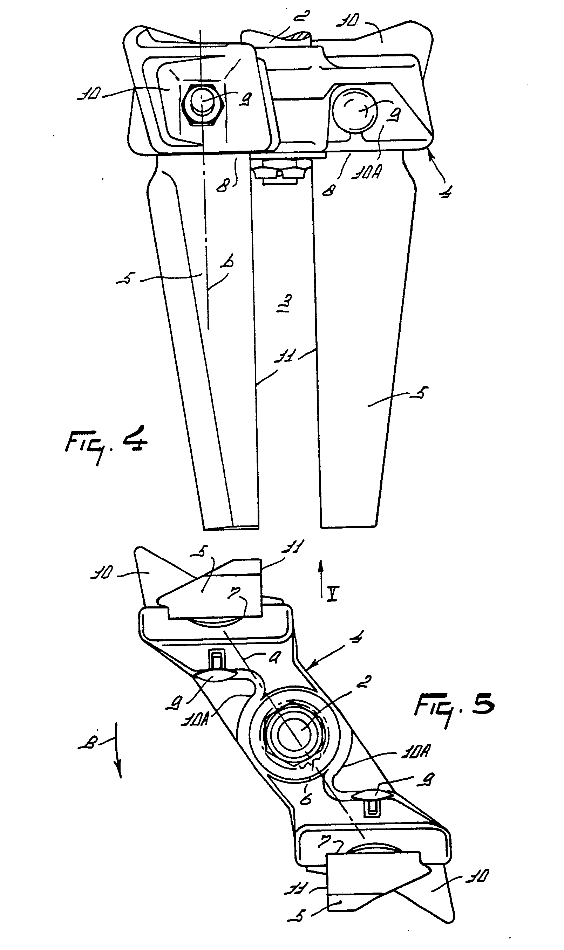

The top and front of the frame portion 1 is provided, substantially centrally across the width thereof, with a coupling member or trestle 27 that is constructed and arranged for connecting the implement to the three-point lifting device or hitch at the rear of an operating tractor or other vehicle. The coupling member or trestle 27 comprises two upright plates 28 which are substantially parallel to one another and to the direction A, the plates 28 being horizontally spaced apart from one another and the shape of each of them being apparent from Figure 2 of the drawings. These plates 28 effectively secure the remainder of the coupling member of trestle 27 to the top of the hollow box-section frame portion 1. Two obliquely upwardly convergent plates 29 project upwardly from the lower edges of the two upright plates 28, each plate 29 being of substantially U-shaped cross-section and being arranged with the limbs of the U directed inwardly. Upper edge regions of the two plates 29 have corresponding strips 30 secured to them in such a way that the strips 30 extend substantially horizontally parallel to each other and to the direction A in relatively spaced apart relationship. The strips 30 are releasably clamped to one another by a pair of bolts 31 with the shank of each bolt 31 surrounded, between the two strips 30, by a corresponding spacing sleeve 32 (Figure 3). The rear spacing sleeve 32 carries, between the strips 30, a downwardly and rearwardly inclined apertured lug 33 to which the upper ends of downwardly and rearwardly divergent tie beams 34 are secured by a bolt, the opposite lower ends of the two tie beams 34 being releasably secured to further well spaced apart lugs at the top and rear of the hollow frame portion I. The tie beams 34 assist the maintenance of a rigid connection between the hollow frame portion 1 and the coupling member or trestle 27. An upper coupling point is defined at the leading ends of the strips 30 and lower horizontally spaced apart coupling points are defined at the leading ends of the two upright plates 28, a rod or bar being entered through slots formed in those leading ends to provide pivotal connections to the lower lifting links of the three-point lifting device or hitch of the co-operating tractor or other vehicle at least when the implement is connected thereto. The coupling member or trestle 27 can be manufactured quickly and easily at a relatively low cost but, nevertheless, is of a strong and reliable construction.

Each shaft 2 is provided, inside the hollow frame portion 1, with a corresponding straight- or spur-toothed pinion 35, the sizes of the pinions 35 being such that the teeth of each of them are in mesh with those of the or each immediately neighbouring pinion 35 in the single row of twelve, in this embodiment, such pinions 35. Due to this intermeshing relationship of the pinions 35, each shaft 2, soil working member 3 and pinion 35 will revolve in the opposite direction B to the or each immediately neighbouring similar assembly when the implement is in use. One of the centre pair of shafts 2 in the single row thereof has an upward extension through the flat top of the hollow frame portion 1 into a gear box 36 that is firmly but releasably bolted in position, or otherwise mounted, on that flat top. The gear box 36 includes a rotary input shaft 38 whose splined or otherwise keyed end projects substantially horizontally forwards from the front of that gear box in substantially the direction A where it can be placed in driven connection with the rear power take-off shaft of an agricultural tractor or other operating vehicle by way of an intermediate telescopic transmission shaft (not shown), which is of a construction that is known per se, having universal joints at its opposite ends. Shafts and bevel pinions within the gear box 36 place the rotary input shaft 38 in driving connection with the upward extension of said one of the shafts 2 that has been mentioned above and the back of the gear box 36, with respect to the direction A, is provided with a change-speed gear 37 whose construction is not the subject of the present invention. It suffices to say that the change-speed gear 37 has a readily removable cover beneath which the splined or otherwise keyed ends of two shafts are accessible to co-operate with the matchingly internally splined or otherwise keyed hubs of two straight- or spur-toothed pinions whose sizes are such that their teeth will mesh with one another and dictate a corresponding transmission ratio between the two shafts concerned. The two pinions can be interchanged on the shaft ends or can be exchanged for at least one other pair of co-operating pinions of different relative sizes so that any chosen one of a number of different transmission ratios is available enabling the soil working members 3 to be rotated at faster or slower rates without having to alter the driving speed of rotation which is applied to the leading end of the rotary input shaft 38.

Before starting work and whilst the implement is still raised clear of contact with the ground by the three-point lifting device or hitch of the tractor or other vehicle to which it is connected, retaining pins 21 can be entered through appropriate holes 20 in the forked guides 16 to ensure that, when the roller 15 meets the ground surface and is displaced upwardly about the axis defined by the pivot pins 13, it will reach a bodily level that will give the required maximum possible depth of penetration of the tines 5 into the ground for the particular job that is being undertaken. As mentioned above, further retaining pins 21 can then be entered in appropriate holes above the upper edges of the supports 18 to minimise jolting. It may also be necessary to alter the transmission ratio in the change-speed gear 37 as described above and, possibly, to re-position the track-disrupting members 26 on the screening beam 25. The first two of these adjustments will normally be undertaken in the light of the nature and condition of the soil that is to be cultivated and the particular purpose for which that soil is required after its cultivation whilst the latter depends upon the wheel track width of the operating tractor or other vehicle.

The coupling member or trestle 27 is employed to connect the implement to the upper and lower lifting links of a three-point lifting device or hitch at the rear of the agricultural tractor or other vehicle which moves and operates the implement and a telescopic transmission shaft having universal joints at its opposite ends places the rotary input shaft 38 of the gear box 36 in driven connection with a power take-off shaft at the back of the same tractor or other vehicle. As the implement moves operatively over the ground in the direction A, all of the soil working members 3 will be rotated at a speed that is dependent upon the transmission ratio that has been set in the change-speed gear 37, the speed of driving rotation that is applied to the rotary input shaft 38 having a substantially constant value. The twelve, in this embodiment, soil working members 3 work individual strips of ground that extend in the direction A and the distance between the lower ends of the two tines 5 of each member 3 is substantially the same as, or a little greater than, the distance between the axes of rotation of immediately neighbouring shafts 2 with the result that the individual strips of ground that have just been mentioned overlap, or at least adjoin, one another to produce a single broad strip of worked soil, extending in the direction A, that will have a width of substantially three metres in the case of the implement that is being described by way of example. The way in which the upper fastening portions 8 of the tines 5 are releasably secured in the recesses 7 and particularly the fact that the leading edges of said tines 5, with respect to the corresponding directions of rotation B, are further from the axis of rotation of each shaft 2 than are the rear edges thereof, ensures that the flat sides of the tines 5 will be very effective in crumbling or otherwise breaking up the soil without producing smearing thereof even when that soil is of heavy consistency and is in a wet condition.

The track-disruption members 26 ensure that the wheel tracks produced by the operating agricultural tractor or other vehicle are well broken up before the earth of which they are composed is dealt with by the following soil working members 3. The members 26 are mounted on the screening beam 25 so as to be adjustable to different positions therealong, in chosen ones of which positions they can be firmly retained by the co-operation of bolts and holes which are formed for that purpose, this enabling the positions of, and the spacing between, the members 26 to be varied as may be necessary to suit the track width of different tractors or other vehicles with which the implement may be used. The track-disruption members 26 additionally serve to stabilise the implement during its progress over the ground and the stabilising effect that they produce is particularly advantageous when a seed drill or planting machine is arranged immediately behind the soil cultivating implement to sow seeds, or position plants, directly in the soil that has just been worked by the cultivating implement.

In addition to preventing stones and other hard objects from being flung laterally of the path of travel of the implement by the rapidly moving tines 5 of its soil working members 3, the shield plates 22 that are located close to the opposite ends of the row of soil working members 3 co-operate with the immediately neighbouring members 3 in working the soil to substantially the same thorough extent as is produced by co-operation between pairs of soil working members 3 at positions closer to the centre of the implement. The shield plates 22 are yieldable outwardly against the resilient opposition of the springs 25A to ensure optimum co-operation between the plates 22 and the neighbouring soil working members 3 and to prevent breakage or other significant damage should a stone or other hard object become momentarily jammed between one of the plates 22 and the immediately neighbouring rotary soil working member 3.

Although certain features of the soil cultivating implement that have been described and/or that are illustrated in the accompanying drawings will be set forth in the following claims as inventive features, it is emphasized that the invention is not necessarily limited to those features and that it includes within its scope each of the parts of the soil cultivating implement that has been described, and/or that is illustrated in the accompanying drawings, both individually and in various combinations.

## Claims

1. A soil cultivating implement which comprises an elongate frame portion (1) that extends transverse to the intended direction of operative travel (A) of the implement, the frame portion (1) supporting a plurality of power drivable soil working members (3) and the implement also comprising a ground roller (15) which is arranged behind the soil working members (3) relative to said direction of travel (A) and which is upwardly and downwardly adjustable in bodily position with respect to the soil working members by the displacement of supporting arms (14) about a pivotal axis (13), and each of said pivotable supporting arms (14) is provided with an upwardly extending guide (16) arranged to co-operate adjustably and retainingly with a support which is fixed in position relative to said frame portion, the chosen position of said guide (16) with respect to said supports (18) determining the bodily level of the ground roller (15) with respect to that of the soil working members (3), the soil working members are arranged in a row alongside one another in co-operating relationship, each soil working member (3) being rotatable about a corresponding substantially vertical axis and each soil working member includes a substantially horizontal carrier (4) at opposite end regions of which downwardly projecting soil working tools (5) are mounted, characterized in that a beam (25) is arranged at substantially the same level as said carriers (4) and in advance thereof with respect to said direction of operative travel (A), the beam (25) being provided with track-disruption means (26) arranged to break up the wheel tracks of the tractor or other vehicle which moves the implement over the ground during its use, the said track disruption means (26) comprises members which are inclined downwardly and rearwardly from the said beam (25) with respect to the intended direction of operative travel (A) of the implement.

2. An implement as claimed in claim 1, characterized in that the track-disrupting means (26) comprises members which are connected to the front of the beam (25) with respect to the intended direction of operative travel of the implement and which are strip-shaped, each such member being arranged with its general plane parallel or substantially parallel to the intended direction of operative travel (A) of the implement.

3. An implement as claimed in claim 1 or 2, characterized in that the downward and rearward inclination of the members which afford the track-disrupting means (26) is substantially matched by the downward and rearward inclination of the front of said beam (25).

4. An implement as claimed in any one of the preceding claims, characterized in that the said beam (25) has an oblong cross-section and is so disposed that the broader sides thereof, as seen in cross-section, are inclined to the vertical.

5. An implement as claimed in any preceding claim, characterized in that the said members which afford the track-disruption means (26) are adjustable in position lengthwise along the said beam (25).

6. An implement as claimed in any preceding claim, characterized in that each soil working member (3) comprises soil working tools in the form of strip-or blade-shaped tines (5), the leading edges of which are spaced further from the axes of rotation (2) of the corresponding soil working members (3) than are the rear edges thereof with respect to the intended direction of operative rotation (B) of each soil working member (3).

7. An implement as claimed in any preceding claim, characterized in that the carrier (4) of each soil working member (3) is formed with U- or channel-shaped recesses (7) at substantially its opposite ends, each recess (7) defining a fastening surface that is parallel or substantially parallel to an axis (2) about which the soil working member (3) concerned is rotatable, and said fastening surface of each recess (7) is inclined at substantially 40° to the longitudinal axis (a) of the respective carrier (4).

8. An implement as claimed in any preceding claim, characterized in that the front of each carrier (4), with respect to the intended direction of operative rotation (B) of the corresponding soil working member (3), is formed with rebates (10A) which rebates communicate with the fastening surfaces of said recesses (7) by way of bores that are arranged to receive bolts (9) to secure fastening portions (8) of said soil working tools (5) in said recesses (7).

9. An implement as claimed in any preceding claim, characterized in that each bolt (9) secures the corresponding tool fastening portion (8) in one of the recesses (7) with the aid of a clamp (10) which clamp (10) is shaped to provide protection which lies in advance of the shank of the corresponding bolt (9) with respect to the intended direction of operative rotation (B) of the soil working member (3) concerned.

## Patentansprüche

1. Bodenbearbeitungsgerät mit einem langgestreckten Rahmenteil (1), das sich quer zu der Arbeitsrichtung (A) des Gerätes erstreckt, und das eine Mehrzahl von angetriebenen Bodenbearbeitungsgliedern (2) trägt, wobei das Gerät außerdem eine Bodenwalze (15) aufweist, die in bezug auf die Arbeitsrichtung (A) hinter den Bodenbearbeitungsgliedern (3) angeordnet ist und die in bezug auf die Arbeitsglieder aufwärts und abwärts durch Verstellen von Tragarmen (14) um eine Schwenkachse (13) einstellbar ist, wobei jeder schwenkbare Tragarm (14) mit einer aufwärts gerichteten Führung (16) versehen ist, die zum einstellbaren und feststellbaren Zusammenwirken mit einem Träger angeordnet ist, der relativ zu dem Rahmenteil fest positioniert ist, wobei die relativ zu den genannten Trägern (18) gewählte Lage der Führung (16) die Höhenlage der Bodenwalze (15) zu derjenigen der Bodenbearbeitungsglieder (3) bestimmt, die in einer Reihe nebeneinander zusammenwirkend angeordnet sind, wobei jedes Bodenbearbeitungsglied (3) um eine zugehörige im wesentlichen vertikale Achse drehbar ist und einen im wesentlichen horizontalen Träger (4) aufweist, nahe dessen einander gegenüberliegenden Enden abwärts gerichtete Bodenbearbeitungswerkzeuge (5) befestigt sind, dadurch gekennzeichnet, daß in etwa gleicher Höhe wie die genannten Träger (4) und in bezug auf die Arbeitsrichtung (A) vor ihnen ein Balken (25) angeordnet ist, der mit Spur-Aufreißern (26) zum Aufbrechen der Radspuren des Schleppers oder eines anderen das Gerät im Betrieb über den Boden ziehenden Fahrzeuges versehen ist, und daß die Spur-Aufreißer (26) Teile aufweisen, die von den Balken (25) aus abwärts und in bezug auf die Arbeitsrichtung (A) des Gerätes nach hinten gerichtet sind.

2. Gerät nach Anspruch 1, dadurch gekennzeichnet, daß die Spur-Aufreißer (26) Teile aufweisen, die in bezug auf die Arbeitsrichtung des Gerätes mit der Stirnseite des Balkens (25) verbunden und streifenförmig sind, und daß jedes dieser Teile mit seiner Hauptebene parallel oder im wesentlichen parallel zu der Arbeitsrichtung (A) des Gerätes liegt.

3. Gerät nach Anspruch 1 oder 2, dadurch gekennzeichnet, daß die abwärts und nach hinten verlaufende Ausrichtung der Teile, welche das Aufbrechen durch die Spur-Aufreißer (26) bewirken, an die abwärts und nach hinten gerichtete Ausrichtung der Stirnseite des Balkens (25) angepaßt ist.

4. Gerät nach einem der vorhergehenden Ansprüche, dadurch gekennzeichnet, daß der Balken (25) einen langgestreckten Querschnitt hat und derart angeordnet ist, daß seine im Querschnitt breiteren Seiten zur Vertikalen geneigt sind.

5. Gerät nach einem der vorhergehenden Ansprüche, dadurch gekennzeichnet, daß die Teile, welche das Aufbrechen durch die Spur-Aufreißer (26) bewirken, längs des Balkens (25) verstellbar sind.

6. Gerät nach einem der vorhergehenden Ansprüche, dadurch gekennzeichnet, daß jedes Bodenbearbeitungsglied (3) als streifen- oder messerförmige Zinken ausgebildete Bodenbearbeitungswerkzeuge aufweist, deren Vorderkanten, bezogen auf die Drehrichtung (B) des Bodenbearbeitungsgliedes (3), einen größeren Abstand von der Drehachse (2) des entsprechenden Bodenbearbeitungsgliedes (3) haben als die rückseitigen Kanten.

7. Gerät nach einem der vorhergehenden Ansprüche, dadurch gekennzeichnet, daß der Träger (4) jedes der Bodenbearbeitungswerkzeuge (4) nahe seinen einander gegenüberliegenden Enden U- oder kanalförmige Ausnehmungen (7) aufweist, wobei jede Ausnehmung (7) eine Befestigungsfläche bildet, die parallel oder im wesentlichen parallel zu einer Achse (2) liegt, um die das betreffende Bodenbearbeitungsglied (3) drehbar ist, und daß die Befestigungsfläche jeder Ausnehmung (7) im Winkel von etwa 40° zur Längsachse (a) des betreffenden Trägers (4) geneigt ist.

8. Gerät nach einem der vorhergehenden Ansprüche, dadurch gekennzeichnet, daß die in bezug auf die Drehrichtung des jeweiligen Bodenbearbeitungsgliedes (3) vordere Seite jedes Trägers (4) Vertiefungen (10A) aufweist, die mit den Befestigungsflächen der genannten Ausnehmungen (7) über Bohrungen in Verbindung stehen, welche zur Aufnahme von Bolzen (9) vorgesehen sind, die Befestigungsteile (8) der Bodenbearbeitungswerkzeuge (5) in den Ausnehmungen (7) haltern.

9. Gerät nach einem der vorhergehenden Ansprüche, dadurch gekennzeichnet, daß jeder Bolzen (9) den zugehörigen Werkzeug-Befestigungsteil (8) in einer der Ausnehmungen (7) mittels einer Klemmvorrichtung (10) sichert, die derart geformt ist, daß sie einen- bezogen auf die Drehrichtung (B) des Bodenbearbeitungsgliedes (3)- vor dem Schaft des Bolzens (9) befindlichen Schutz bildet.

**Revendications**

1. Machine pour cultiver le sol comprenant un élément de chassis allongé (1) qui s'étend transversalement au sens de marche (A) prévu pour le travail de la machine, l'élément de chassis (1) portant une pluralité d'organes de travail du sol (3) pouvant être entraînés par un moteur, la machine comprenant aussi un rouleau (15) reposant sur le sol qui est disposé derrière les organes de travail du sol (3) par rapport audit sens de marche (A) et qui est réglable vers le haut et vers le bas dans sa position d'ensemble par rapport aux organes de travail du sol, par déplacement de bras de support (14) autour d'un axe de pivotement (13), chacun desdits bras de support pivotants (14) étant muni d'un guide (16) s'étendant vers le haut, agencé pour coopérer de manière réglable avec un support qui est en position fixe par rapport audit élément de chassis et pour retenir ledit support, la position choisie pour ledit guide (16) par rapport auxdits supports (18) déterminant le niveau général du rouleau (15) par rapport à celui des organes de travail du sol (3), ces organes de travail du sol étant disposés en une rangée côte à côte en relation de coopération, chaque organe de travail du sol (3) pouvant tourner autour d'un axe (2) correspondant sensiblement vertical et chaque organe de travail du sol comprenant un élément porteur (4) sensiblement horizontal, sur les régions terminales opposées duquel sont montés des outils de travail du sol (5) étant en saillie vers le bas, caractérisée en ce qu'une poutre (25) est disposée sensiblement au même niveau que lesdits éléments porteurs (4) et en avant de ceux-ci par rapport audit sens de marche (A) du travail, la poutre (25) étant munie de moyens (26) pour aplanir les ornières formées par le passage des roues du tracteur ou autre véhicule entraînant la machine sur le terrain au cours de son utilisation, lesdits moyens (26) destinés à aplanir les ornières comprenant des organes qui sont inclinés vers le bas et vers l'arrière à partir de ladite poutre (25) par rapport au sens de marche (A) prévu pour le travail de la machine.

2. Machine agricole selon la revendication 1, caractérisée en ce que les moyens (26) pour aplanir les ornières du tracteur comprennent des organes qui sont reliés à l'avant de la poutre (25) par rapport au sens de marche (A) prévu pour le travail de la machine et qui sont en forme de barres plates, chacun de ces organes étant disposé avec son plan général parallèle ou sensiblement parallèle au sens de marche (A) prévu pour la machine.

3. Machine agricole selon la revendication 1 ou 2, caractérisée en ce que l'inclinaison vers le bas et vers l'arrière des organes constituant les moyens (26) pour aplanir les ornières est sensiblement concordante avec l'inclinaison vers le bas et vers l'arrière de l'avant de ladite poutre (25).

4. Machine selon l'une quelconque des revendications précédentes, caractérisée en ce que ladite poutre (25) a une section transversale oblongue et est disposée de telle manière que ses côtés les plus larges, vus en coupe, sont inclinés par rapport à la verticale.

5. Machine selon l'une quelconque des revendications précédentes, caractérisée en ce que lesdits organes constituant les moyens (26) pour aplanir les ornières sont réglables en position longitudinalement le long de ladite poutre (25)

6. Machine selon l'une quelconque des revendications précédentes, caractérisée en ce que chaque organe de travail du sol (3) comprend des outils de travail du sol sous la forme de dents (5) en forme de barres plates ou de lames dont les bords d'attaque sont situés plus loin des axes de rotation (2) des organes de travail du sol (3) correspondants, que leurs bords postérieurs par rapport au sens de rotation (B) prévu pour le travail de chaque organe de travail du sol (3).

7. Machine selon l'une quelconque des revendications précédentes, caractérisée en ce que l'élément porteur (4) d'un organe de travail du sol (3) est formé avec des logements creux (7) en forme de U ou de gouttières, sensiblement sur ses extrémités opposées, chaque logement (7) définissant une surface de fixation qui est parallèle ou sensiblement parallèle à un axe (2) autour duquel peut tourner l'organe de travail du sol (3) concerné, ladite surface de fixation de chaque logement (7) étant inclinée à environ 40° par rapport à l'axe longitudinal (a) de l'élément porteur (4) respectif.

8. Machine selon l'une quelconque des revendications précédentes, caractérisée en ce que l'avant de chaque élément porteur (4), par rapport au sens de rotation (B) prévu pour le travail de l'organe de travail du sol (3) correspondant, est formé avec des bords rabattus (10A) qui communiquent avec les surfaces de fixation desdits logements (7) par de salésages agencés pour recevoir des boulons (9) pour fixer dans lesdits logements (7) des parties (8) desdits outils de travail du sol (5) destinées à la fixation de ces outils (5).

9. Machine selon l'une quelconque des revendications précédentes, caractérisée en ce que chaque boulon (9) fixe la partie (8) de fixation de l'outil (5) correspondant dans un des logements (7) à l'aide d'un étrier (10) conformé de manière à constituer une protection et qui est situé en avant de la tige du boulon (9) correspondant par rapport au sens de rotation (B) prévu pour la rotation de l'organe de travail du sol (3) concerné, au cours de son travail.

FIG. 1

Fig. 2

Fig. 3

2

FIG. 4

FIG. 5